(19)

Europäisches
Patentamt
European
Patent Office
Office européen
des brevets

(11)     **EP 4 316 809 A1**

(12)     **EUROPEAN PATENT APPLICATION**
published in accordance with Art. 153(4) EPC

(43) Date of publication:
**07.02.2024   Bulletin 2024/06**

(21) Application number: **22775246.6**

(22) Date of filing: **14.03.2022**

(51) International Patent Classification (IPC):
**B32B 27/00** (2006.01)     **B32B 27/38** (2006.01)
**B32B 7/06** (2019.01)

(52) Cooperative Patent Classification (CPC):
**B32B 7/06; B32B 27/00; B32B 27/38**

(86) International application number:
**PCT/JP2022/011435**

(87) International publication number:
**WO 2022/202455 (29.09.2022 Gazette 2022/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:   **25.03.2021   JP 2021051500**

(71) Applicant: **NITTO DENKO CORPORATION**
**Ibaraki-shi**
**Osaka 567-8680 (JP)**

(72) Inventors:
• **OBAN, Ryohei**
**Ibaraki-shi, Osaka 567-8680 (JP)**
• **SHIMOKAWA, Kayo**
**Ibaraki-shi, Osaka 567-8680 (JP)**
• **ENDO, Asuka**
**Ibaraki-shi, Osaka 567-8680 (JP)**
• **ISHIGURO, Shigeki**
**Ibaraki-shi, Osaka 567-8680 (JP)**
• **NAKAO, Eriko**
**Ibaraki-shi, Osaka 567-8680 (JP)**

(74) Representative: **Müller-Boré & Partner**
**Patentanwälte PartG mbB**
**Friedenheimer Brücke 21**
**80639 München (DE)**

(54)   **SURFACE MODIFICATION SHEET, LAMINATE, SURFACE-MODIFIED MEMBER, COATED
OBJECT, PRODUCTION METHOD FOR SURFACE-MODIFIED MEMBER, AND PRODUCTION
METHOD FOR COATED OBJECT**

(57)     The present invention relates to a surface-modifying sheet including a release sheet and a surface-modifying layer, in which the surface-modifying layer contains a polymeric component and an oligomer component, the oligomer component has a weight average molecular weight (Mw) of 100 to 7,000, a HSP distance (Ra) between the oligomer component and a bisphenol A type glycidyl ether is 7.5 or more, and the oligomer component is contained in an amount of 0.1 to 30 parts by mass with respect to 100 parts by mass of the polymeric component, and relates to a laminate, a surface-modified member and a coated article using the surface-modifying sheet, a method for producing the surface-modified member, and a method for producing the coated article.

EP 4 316 809 A1

**Description**

TECHNICAL FIELD

The present invention relates to a surface-modifying sheet, a laminate, a surface-modified member, a coated article, a method for producing the surface-modified member, and a method for producing method for producing the coated article.

BACKGROUND ART

Nowadays, resins which are lightweight and have excellent impact resistance are used in members of transporting machines such as railroad cars, aircrafts, ships, and motor vehicles, electronic appliances, housing equipment, and the like, and surfaces thereof have adherends of various materials bonded thereto. Such resin members have coating films having various functions.

In cases in which a resin member is bonded to a metal or another resin, it is necessary to attain sufficient adhesion. Rubber epoxy-based curable resin compositions are known as such adhesives in the related art.

However, resin members have a poor affinity for adhesives and sufficient bonding strength is not obtained with adhesives or adhesive sheets in the related art. Furthermore, resin members having excellent strength, such as carbon-fiber composite materials (CFRP), are required to have a high level of bonding strength.

For this reason, it is necessary, for bonding of the resin members, to apply a primer solution or to perform various surface treatments including sandblasting, corona treatment, and plasma treatment as pretreatments before the application of the primer solution.

For example, as a method for obtaining sufficient bonding strength, there is a technique in which an appropriate primer solution is applied in order to modify a surface of a thermoplastic resin member. However, in the case of resins having high solvent resistance (for example, PPS, PA, and PP), there is a problem in that the primer-solution application cannot attain sufficient bonding strength. Further, such a surface-treatment method necessitates a surface treatment step and a drying step and this results in an increased number of steps and a decrease in production efficiency. The method hence further has a problem concerning cost.

One method for imparting sufficient bonding strength to a resin member by performing an adhesion-facilitating treatment is a technique in which a surface-modifying sheet is used.

For example, Patent Literature 1 describes a surface-modifying sheet capable of imparting sufficient bonding strength to thermoplastic resins.

Furthermore, investigations have been made on a technique (Patent Literature 2) for producing a surface-modified member having a smooth surface using a surface-modifying sheet and a technique (Patent Literature 3) in which a surface-modified member is inhibited from wrinkling using a release sheet having low linear expansion.

CITATION LIST

PATENT LITERATURE

Patent Literature 1: JP2017-128722A
Patent Literature 2: JP2019-194016A
Patent Literature 3: JP2020-163831A

SUMMARY OF INVENTION

TECHNICAL PROBLEM

However, those techniques of the related art have been found to have a new problem in that in cases in which the resin member included in a surface-modified member contains a reinforcing material such as carbon fibers or glass fibers, the use of a surface-modifying sheet sometimes causes a change in appearance with the lapse of time in high-temperature high-humidity environments although effective in improving the adhesion between the resin member and the coating film.

In view of the above problems, an object of the present invention is to provide a surface-modifying sheet in which a smooth surface-modifying layer having excellent bonding strength, preventing occurrence of unevenness, and having a uniform thickness can be formed, a change in appearance is prevented even in a high-temperature high-humidity environment, and the surface-modifying layer and a resin member can be integrally shaped at the time of forming a surface-modified member. Other objects are to provide a laminate, a surface-modified member, and a coated article which are obtained using the surface-modifying sheet, and to provide a method for producing the surface-modified member and a method for producing the coated article.

SOLUTION TO PROBLEM

The present inventors diligently made investigations in order to solve the problem. As a result, the present inventors have found that by forming a sheet-shaped surface-modifying layer and adding an oligomer component having low compatibility with a resin contained in a resin member and having a molecular weight in a specific range to the surface-modifying layer, a smooth surface-modifying layer having excellent bonding strength, preventing an occurrence of unevenness, and having a uniform thickness can be formed, a change in appearance is prevented even in a high-temperature high-humidity environment, and the surface-modifying layer and the resin member can be integrally shaped at the time of forming a surface-modified member, thereby completing the present invention.

Methods for solving the problems are as follows.

[1] A surface-modifying sheet including:

a release sheet and a surface-modifying layer, in which
the surface-modifying layer contains a polymeric component and an oligomer component,
the oligomer component has a weight average molecular weight (Mw) of 100 to 7,000,
a HSP distance (Ra) between the oligomer component and a bisphenol A type glycidyl ether is 7.5 or more, and
the oligomer component is contained in an amount of 0.1 to 30 parts by mass with respect to 100 parts by mass of the polymeric component.

[2] The surface-modifying sheet according to [1], in which
the polymeric component has a nonpolar unit and a polar unit.
[3] The surface-modifying sheet according to [1] or [2], in which
the surface-modifying layer has an average thickness of 0.1 $\mu$m to 50 $\mu$m.
[4] A laminate including:
the surface-modifying layer of the surface-modifying sheet according to any one of [1] to [3] is laminated to at least a part of a surface of a resin material containing a heat-curable epoxy resin.
[5] The laminate according to [4], in which
the resin material is a prepreg.
[6] A surface-modified member, in which
the surface-modifying layer of the surface-modifying sheet according to any one of [1] to [3], is laminated to at least a part of a surface of a resin member containing a heat-curable epoxy resin.
[7] A coated article, in which
a coating film is provided to at least a part of the surface-modified member according to [6].
[8] The coated article according to [7], in which
the coating film is at least a kind selected from a coating, a printed layer, a vapor-deposited layer, and a plating layer.
[9] A method for producing a surface-modified member using the surface-modifying sheet according to any one of [1] to [3], the method including:
a lamination step of laminating the surface-modifying layer to a resin member containing a heat-curable epoxy resin by heat pressing.
[10] A method for producing a coated article using the surface-modifying sheet according to any one of [1] to [3], the method including:

a step of producing a surface-modified member by laminating the surface-modifying layer to a resin member containing a heat-curable epoxy resin by heat pressing and
a step of forming a coating film on the surface-modifying-layer side of the surface-modified member.

ADVANTAGEOUS EFFECTS OF INVENTION

In a surface-modifying sheet according to an embodiment of the present invention, a smooth surface-modifying layer having excellent bonding strength, preventing an occurrence of unevenness, and having a uniform thickness can be formed, a change in appearance is prevented even in a high-temperature high-humidity environment, and the surface-modifying layer and a resin member can be integrally shaped at the time of forming a surface-modified member.

BRIEF DESCRIPTION OF DRAWINGS

[FIG. 1] FIG. 1 is a schematic cross-sectional view showing an example of a surface-modifying sheet according to an embodiment of the present invention.

[FIG. 2] FIG. 2 is a schematic cross-sectional view showing an example of a surface-modified member according to the embodiment of the present invention.

[FIG. 3] FIG. 3 is a schematic cross-sectional view showing a form in which the surface-modifying sheet according to the embodiment of the present invention is placed on a resin material.

[FIG. 4] FIG. 4 is a schematic cross-sectional view showing an example of a coated article according to the embodiment of the present invention.

DESCRIPTION OF EMBODIMENTS

Embodiments of the present invention are described in detail below.

(Surface-modifying sheet)

A surface-modifying sheet according to an embodiment of the present invention includes:

a release sheet and a surface-modifying layer, in which
the surface-modifying layer contains a polymeric component and an oligomer component,
the oligomer component has a weight average molecular weight (Mw) of 100 to 7,000,
a HSP distance (Ra) between the oligomer component and a bisphenol A type glycidyl ether is 7.5 or more, and
the oligomer component is contained in an amount of 0.1 to 30 parts by mass with respect to 100 parts by mass of the polymeric component.

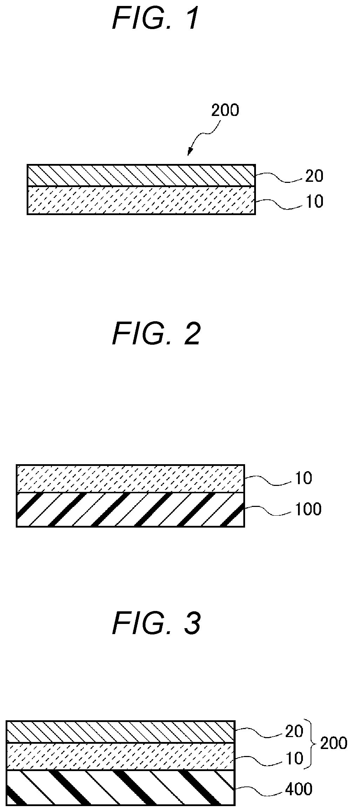

For example, as shown in FIG. 1, a surface-modifying sheet 200 includes a release sheet 20 and a surface-modifying layer 10.

In the surface-modifying sheet according to the embodiment of the present invention, the surface-modifying layer is sheet-shaped; thus, the surface-modifying layer is not disposed by coating on a surface of a resin member, but can be integrally shaped therewith through a heat treatment while placed on a resin material. Because of this, an occurrence of unevenness due to cissing and the like can be prevented and the surface-modifying layer can be formed in an even thickness on the surface of the resin member. In a case in which the surface-modifying layer is formed on a part of the surface of the resin member, a decrease in yield due to protrusion or the like can be prevented.

In a case of a surface-modified member constituted using a resin member containing a reinforcing material, for example, carbon fibers or glass fibers, appearance has sometimes changed in a high-temperature high-humidity environment with the lapse of time.

The present inventors presume this cause as follows. At the time of producing the surface-modified member, specifically, at the time of placing the surface-modifying sheet on the resin material and performing a heat treatment, an unreacted resin (uncured resin contained in a heat-curable resin) contained in the resin material is transferred to the surface-modifying layer. In this state, when the surface-modified member is exposed to the high-temperature high-humidity environment, the unreacted resin acts as a plasticizer in the surface-modifying layer to lower elasticity of the surface-modifying layer. As a result, it is considered that the reinforcing material moves to the surface-modifying layer and changes the appearance.

In the surface-modifying sheet according to the embodiment of the present invention, the surface-modifying layer contains the oligomer component having a molecular weight in a specific range. Since the oligomer component has a low molecular weight and high mobility, it is considered that a part thereof is segregated (bleeding out) on a surface-modifying-layer side of a surface of the surface-modifying sheet during or after formation of the surface-modifying layer. When the surface-modified member is produced using the surface-modifying sheet in which the oligomer component is segregated on the surface thereof, since the oligomer component has low compatibility with a resin in the resin material, the unreacted resin in the resin material can be prevented from transferring to the surface-modifying layer. Since the oligomer component functions as a block layer as described above, the elasticity of the surface-modifying layer is less likely to be reduced even when exposed to the high-temperature high-humidity environment, the reinforcing material in the resin member is prevented from moving to the surface-modifying layer, and deformation of the surface-modifying layer can be prevented. As a result, it is presumed that good appearance can be maintained and coating film adhesion is also good.

Although the term "block layer" is used in the above description for the sake of convenience, in order to cause the oligomer component to function as the block layer, that is, in order to prevent the transfer of the unreacted resin in the resin material to the surface-modifying layer, at least a part thereof may be segregated on the surface-modifying-layer side of the surface of the surface-modifying sheet, and a layer may not be necessarily formed.

<Surface-modifying Layer>

(Oligomer Component)

The weight average molecular weight (Mw) of the oligomer component contained in the surface-modifying sheet according to the embodiment of the present invention is 100 to 7,000.

When the weight average molecular weight is less than 100, the mobility of the oligomer component becomes too high, so that the function as the block layer (the function of preventing the transfer of the unreacted resin in the resin material to the surface-modifying layer) at the time of producing the surface-modified member becomes insufficient, and the appearance change easily occurs. Further, when the weight average molecular weight is more than 7,000, the oligomer component is less likely to be segregated on the surface of the surface-modifying layer during or after the formation of the surface-modifying layer, and thus in this case, the function as the block layer also becomes insufficient.

The weight average molecular weight of the oligomer component is preferably 200 or more, more preferably 300 or more, and still more preferably 500 or more from the viewpoint of preventing the appearance change. Further, from the viewpoint of facilitating the segregation of the oligomer component on the surface of the surface-modifying layer, the weight average molecular weight is preferably 6,500 or less, more preferably 6,000 or less, and still more preferably 5,500 or less.

In the present invention, the weight average molecular weight (Mw) of the oligomer component is a value in terms of polymethyl methacrylate determined from a calibration curve prepared from standard polystyrene using gel permeation chromatography (GPC) method. Details of measurement will be described later in Examples.

The HSP distance (Ra) between the oligomer component and the bisphenol A type glycidyl ether is 7.5 or more.

As described later, the surface-modifying sheet according to the embodiment of the present invention can be suitably used for producing a surface-modified member using a resin member containing a heat-curable epoxy resin. The HSP distance (Ra) is an index of compatibility between the oligomer component and the heat-curable epoxy resin contained in the resin member (which may be the resin material), and a higher value indicates lower compatibility.

By setting the HSP distance (Ra) to 7.5 or more and reducing the compatibility between the oligomer component and the heat-curable epoxy resin contained in the resin member, the oligomer component functions as the block layer, and transfer of an unreacted epoxy resin in the resin material to the surface-modifying layer can be prevented during the production of the surface-modified member.

The HSP distance (Ra) is preferably 7.8 or more, more preferably 8.0 or more, and still more preferably 8.5 or more from the viewpoint of preventing the appearance change. Further, the higher the HSP distance (Ra), the lower the compatibility between the oligomer component and the heat-curable epoxy resin contained in the resin member, and thus although an upper limit of the HSP distance is not particularly limited, the HSP distance is preferably 45 or less.

In the present invention, the HSP distance (Ra) between the oligomer component and the bisphenol A type glycidyl ether is used as the index of the compatibility between the oligomer component and the heat-curable epoxy resin contained in the resin member, but the bisphenol A type glycidyl ether is merely a compound used as an index, and the bisphenol A type glycidyl ether may or may not be contained in the resin member. That is, the heat-curable epoxy resin contained in the resin member may be the bisphenol A type glycidyl ether, or may be another heat-curable epoxy resin.

A Hansen solubility parameter (hereinafter referred to as a HSP value) and the HSP distance are described below.

The Hansen solubility parameter is represented by a vector obtained by dividing a Hildebrand solubility parameter into three components of dispersion force ($\delta_D$), a permanent dipole intermolecular force ($\delta_P$), and hydrogen bonding power ($\delta_H$), and plotting the components in a three-dimensional space. Those having similar vectors can be determined to have high solubility. That is, a degree of similarity in solubility can be determined from the distance between the HSP values (HSP distance). Definition and calculation of the Hansen solubility parameter are described in Hansen Solubility Parameters: A Users Handbook (CRC Press, 2007) authored by Charles M. Hansen.

There are known HSP values for various resins and solvents, and these may be used as they are, or values calculated using computer software, that is, Hansen solubility parameters in practice (HSPiP) may be used. The HSPiP also includes a database of a resin and a solvent.

In the present specification, HSP values of the oligomer component and the bisphenol A type glycidyl ether are calculated by a Hansen sphere method using HSPiP according to the following steps. An estimation method using a neural network method called Y-MB implemented in HSPiP is used. At this time, for the molecular structure, a Smiles formula, which is a linear molecular notation, is input, $\delta_D$, $\delta_P$, and $\delta_H$ are calculated, three-dimensionally plotted, and a Hansen sphere is obtained from these coordinates. A center coordinate of the Hansen sphere is HSP value of the resin to be evaluated.

The HSP distance (Ra) between the oligomer component (HSP value: $\delta_{D1}$, $\delta_{P1}$, $\delta_{H1}$) and the bisphenol A type glycidyl ether (HSP value: $\delta_{D2}$, $\delta_{P2}$, $\delta_{H2}$) can be calculated by Formula (1).

$$\mathrm{Ra} = \{4 \times (\delta_{D1} - \delta_{D2})^2 + (\delta_{P1} - \delta_{P2})^2 + (\delta_{H1} - \delta_{H2})^2\}^{1/2} \qquad (1)$$

(In Formula (1), $\delta_{D1}$ represents dispersion force of the oligomer component, $\delta_{P1}$ represents the permanent dipole intermolecular force of the oligomer component, $\delta_{H1}$ represents hydrogen bonding power of the oligomer component, $\delta_{D2}$ represents dispersion force of the bisphenol A type glycidyl ether, $\delta_{P2}$ represents permanent dipole intermolecular force of the bisphenol A type glycidyl ether, and $\delta_{H2}$ represents hydrogen bonding power of the bisphenol A type glycidyl ether.)

The oligomer component that can be used is not particularly limited as long as the weight average molecular weight and the HSP distance (Ra) to the bisphenol A type glycidyl ether fall within the above ranges, and examples thereof include an acrylic oligomer, a styrene oligomer, a xylene oligomer, a rosin ester oligomer, a rosin oligomer, a terpene oligomer, a terpene phenol oligomer, a petroleum oligomer, an amine oligomer, an amide oligomer, and an epoxy oligomer

An acrylic oligomer is preferably a non-functional oligomer having no functional group.

As the oligomer component, commercial products may be employed.

Examples of the commercial products of the acrylic oligomers include "UP-1000" and "UP-1080" (ARUFON (registered trademark) manufactured by Toagosei Co., Ltd.).

Examples of commercial products of a styrene oligomer include "UP- 1150" (ARUFON (registered trademark) manufactured by Toagosei Co., Ltd.).

Examples of commercial products of a xylene oligomer include "Nicanor H-80" (Nicanor (registered trademark) manufactured by Fudow Co., Ltd.).

Examples of commercial products of a rosin ester oligomer include "Pensel D-125" ((registered trademark) manufactured by ARAKAWA CHEMICAL INDUSTRIES, LTD.).

In the surface-modifying layer, the oligomer component is contained in an amount of 0.1 to 30 parts by mass with respect to 100 parts by mass of a polymeric component to be described later. If the amount of the oligomer component is less than 0.1 parts by mass, it is difficult to obtain an effect of preventing the appearance change due to addition of the oligomer component. On the other hand, when the amount of the oligomer component exceeds 30 parts by mass, fluidity of the surface-modifying layer is increased, and deformation is likely to occur, resulting in the change in appearance

From the viewpoint of preventing the appearance change, the oligomer component is preferably 0.1 parts by mass or more, more preferably 0.2 parts by mass or more, and still more preferably 0.5 parts by mass or more, with respect to 100 parts by mass of the polymeric component. Further, the oligomer component is preferably 30 parts by mass or less, more preferably 25 parts by mass or less, and still more preferably 20 parts by mass or less, from the viewpoint of preventing an excessive increase in bleeding amount of the oligomer component and sufficiently obtaining the function as the block layer.

One kind of the oligomer component may be contained in the surface-modifying layer, or two or more kinds thereof may be contained. When two or more kinds of oligomer components are contained, a weight average molecular weight of an oligomer as a main component, the HSP distance (Ra) to the bisphenol A type glycidyl ether, and the addition amount may be in the above ranges.

The oligomer as the main component refers to a component contained in an amount of 50 mass% or more based on a total amount of oligomer components contained in the surface-modifying layer.

(Polymeric Component)

The surface-modifying layer (which may be the material for the surface-modifying layer) contains the polymeric component, and the polymeric component preferably has a nonpolar unit and a polar unit. The polar unit has a polar group. A content of the polymeric component in the surface-modifying layer having the polar unit is preferably 50 mass% to 99.9 mass%, more preferably 70 mass% to 99.9 mass%, still more preferably 90 mass% to 99.9 mass%, particularly preferably 92 mass% to 99.9 mass%, and most preferably 95 mass% to 99.9 mass%.

In the present invention, the polymeric component refers to a component having a weight average molecular weight of more than 7,000. In the present invention, a weight average molecular weight (Mw) of a polymer can be measured by a GPC method in the same manner as in measurement of the weight average molecular weight of the oligomer

Examples of the nonpolar unit in the polymeric component include a polyethylene unit, a polypropylene unit, and a polystyrene unit. One kind of nonpolar unit may be employed, or two or more kinds thereof may be employed.

Examples of the polar group in the polar unit in the polymeric component include an epoxy group, a carboxyl group, a nitrile group, an amide group, an ester group, a hydroxyl group, an acid anhydride, and a silanol group. Examples of the polar unit having such a polar group include a glycidyl methacrylate unit, a vinyl acetate unit, an acrylonitrile unit, an amide unit, a (meth)acrylic acid ester unit, a hydroxyethyl (meth)acrylate unit, and a maleic anhydride unit. One kind of polar unit may be employed, or two or more kinds thereof may be employed.

The polymeric component which the surface-modifying layer (or the material for the surface-modifying layer) can include may be at least one polymer selected from among a methoxymethyl-group-containing polymer, a hydroxyl-group-containing polymer, a carboxyl-group-containing polymer, an amino-group-containing polymer, and an amide-group-containing polymer.

Such polymeric components which the surface-modifying layer (or a material for the surface-modifying layer) can include are preferably addition type curing agents, more preferably addition type curing agents which react with an epoxy group.

As the methoxymethyl-group-containing polymer, any desired appropriate polymer containing a methoxymethyl group ($-CH_2-OCH_3$) can be employed unless this polymer lessens the effects of the invention. Examples of such a methoxymethyl-group-containing polymer include a methoxymethyl-group-containing polyamide resin.

As the methoxymethyl-group-containing polymer, commercial products may be employed. Examples of such commercial products include "Fine Resin" (registered trademark) series (manufactured by Namariichi Co., Ltd.).

One kind of methoxymethyl-group-containing polymer may be employed, or two or more kinds thereof may be employed.

From the viewpoint of enhancing the effects of the invention, the methoxymethyl-group-containing polymer has a weight average molecular weight (Mw) of preferably more than 7,000 and 1,000,000 or less, more preferably more than 7,000 and 500,000 or less, still more preferably more than 7,000 and 100,000 or less, particularly preferably more than 7,000 and 70,000, and most preferably 10,000 to 50,000.

As the hydroxyl-group-containing polymer, any desired appropriate polymer containing a hydroxyl group (-OH) can be employed unless this polymer lessens the effects of the invention. Examples of such a hydroxyl-group-containing polymer include a hydroxyl-group-containing acrylic polymer.

As the hydroxyl-group-containing polymer, commercial products may be employed. Examples of such commercial products include "ARUFON (registered trademark) UH-2000 series" (manufactured by Toagosei Co., Ltd.).

One kind of hydroxyl-group-containing polymer may be employed, or two or more kinds thereof may be employed.

From the viewpoint of enhancing the effects of the invention, the hydroxyl-group-containing polymer has a weight average molecular weight (Mw) of preferably more than 7,000 and 1,000,000 or less, more preferably more than 7,000 and 500,000 or less, still more preferably more than 7,000 and 100,000 or less, particularly preferably more than 7,000 and 70,000 or less, and most preferably more than 7,000 and 50,000 or less.

As the carboxyl-group-containing polymer, any desired appropriate polymer containing a carboxyl group (-COOH) can be employed unless this polymer lessens the effects of the invention. Examples of such a carboxyl-group-containing polymer include a carboxyl-group-containing acrylic polymer.

As the carboxyl-group-containing polymer, commercial products may be employed. Examples of such commercial products include "ARUFON (registered trademark) UC-3000 series" (manufactured by Toagosei Co., Ltd.).

One kind of carboxyl-group-containing polymer may be employed, or two or more kinds thereof may be employed.

From the viewpoint of enhancing the effects of the invention, the carboxyl-group-containing polymer has a weight average molecular weight (Mw) of preferably more than 7,000 and 1,000,000 or less, more preferably more than 7,000 and 500,000 or less, still more preferably more than 7,000 and 100,000 or less, particularly preferably more than 7,000 and 70,000 or less, and most preferably more than 7,000 and 50,000 or less.

As the amino-group-containing polymer, any desired appropriate polymer containing an amino group ($-NH_2$) can be employed unless this polymer lessens the effects of the invention.

As the amino-group-containing polymer, commercial products may be employed.

One kind of amino-group-containing polymer may be employed, or two or more kinds thereof may be employed.

The surface-modifying layer (or the material for the surface-modifying layer) may contain at least one compound selected from among tertiary -amine-containing compounds and strong acids.

Such tertiary-amine-containing compounds and strong acids which the surface-modifying layer (or the material for the surface-modifying layer) can contain are preferably catalyst type curing agents, more preferably catalyst type curing agents which react with an epoxy group.

As the tertiary-amine-containing compounds, any desired appropriate compounds containing a tertiary amine can be employed unless the compounds lessen the effects of the invention. Examples of such tertiary-amine-containing compounds include an imidazole derivative and polyethyleneimine.

As the tertiary -amine-containing compounds, commercial products may be employed. Examples of such commercial products of an imidazole derivative include "Curesol" series (imidazole-based epoxy resin curing agents manufactured by Shikoku Chemicals Corp.). Examples of such commercial products of polyethyleneimine include "Epomine" (registered trademark) series (manufactured by Nippon Shokubai Co., Ltd.).

One kind of tertiary-amine-containing compound may be employed, or two or more kinds thereof may be employed.

As the strong acids, any desired appropriate strong acids can be employed unless the strong acids lessen the effects of the invention. Examples of such strong acids include trifluoroborane, ionic liquids, and Nafion.

Examples of the ionic liquids include $BF_3$-$C_2H_5NH_2$ and HMI-$PF_6$.

As the strong acids, commercial products may be employed.

One kind of the strong acid may be employed, or two or more kinds thereof may be employed.

As the amide-group-containing polymer, any desired appropriate polymer containing an amide group (-CO-$NH_2$) can be employed unless this polymer lessens the effects of the invention. Examples of such an amide-group-containing polymer include copolyamide resins.

As the amide-group-containing polymer, commercial products may be employed. Examples of such commercial products include "Amilan CM8000" (manufactured by Toray Industries, Inc.).

One kind of amide-group-containing polymer may be employed, or two or more kinds thereof may be employed.

From the viewpoint of enhancing the effects of the invention, the amide-group-containing polymer has a weight average molecular weight (Mw) of preferably more than 7,000 and 1,000,000 or less, more preferably more than 7,000 and 500,000 or less, still more preferably more than 7,000 and 200,000 or less, particularly preferably 10,000 to 100,000, and most preferably 20,000 to 70,000.

(Other Additives)

The surface-modifying layer (which may be the material for the surface-modifying layer) may further contain a crosslinking agent as an additive.

The crosslinking agent contained in the surface-modifying layer can be in any of: a form of the crosslinking agent which has undergone a crosslinking reaction, a form of the crosslinking agent which has not undergone any crosslinking reaction, a form of the crosslinking agent which has partly undergone a crosslinking reaction, a form which is intermediate between these or a combination of these, and the like.

In a case in which the surface-modifying layer contains a crosslinking agent, since the polymer comes to have a three-dimensional network structure, the surface-modifying layer has high elasticity. Hence, the effect of preventing the appearance change is easy to obtain even in the high-temperature high-humidity environment.

Examples of the crosslinking agent include isocyanate-based crosslinking agents, epoxy-based crosslinking agents, amine-based crosslinking agents, thiol-based crosslinking agents, unsaturated-compound crosslinking agents, oxazoline-based crosslinking agents, aziridine-based crosslinking agents, carbodiimide-based crosslinking agents, metal-chelate-based crosslinking agents, and peroxide-based crosslinking agents. Preferred are epoxy-based crosslinking agents and peroxide-based crosslinking agents.

One kind of crosslinking agent may be contained in the surface-modifying layer, or two or more kinds thereof may be contained.

A content of the crosslinking agent which can be contained in the surface-modifying layer is preferably 0.01 parts by mass or more, more preferably 0.05 parts by mass or more, and still more preferably 0.1 parts by mass or more, with respect to 100 parts by mass of the polymer from the viewpoint of heightening the elasticity. Meanwhile, from the viewpoint of imparting high surface tension, a content thereof is preferably 20 parts by mass or less, more preferably 10 parts by mass or less, and still more preferably 5 parts by mass or less.

The kinds, combinations, contents, and the like of crosslinking agents which can be contained in the surface-modifying layer can be appropriately set in accordance with intended uses and desired properties.

For example, in the case in which the crosslinking agent is a peroxide-based crosslinking agent, a content thereof is preferably 0.01 parts by mass or more, more preferably 0.05 parts by mass or more, and still more preferably 0.1 parts by mass or more, with respect to 100 parts by mass of the polymer. From the viewpoint of imparting a high surface tension, the content thereof is preferably 5 parts by mass or less, more preferably 3 parts by mass or less, and still more preferably 1 part by mass or less.

The surface-modifying layer (which may be the material for the surface-modifying layer) may further contain fine particles as an additive.

When the surface-modifying layer contains the fine particles, a higher elastic modulus can be imparted, and thus the effect of preventing the appearance change can be easily obtained even in a high-temperature high-humidity environment.

The fine particles may be either inorganic fine particles or organic fine particles.

Examples of the inorganic fine particles include fine silicon oxide particles (for example, fumed silica, colloidal silica, precipitated silica, silica gel, silica aerogel, quartz glass, and a glass fiber), fine titanium oxide particles, fine aluminum oxide particles, fine zinc oxide particles, fine tin oxide particles, fine calcium carbonate particles, fine barium sulfate particles, fine talc particles, fine kaolin particles, and fine calcium sulfate particles.

Examples of the organic fine particles include poly(methyl methacrylate) resin powders (fine PMMA particles), silicone resin powders, polystyrene resin powders, polycarbonate resin powders, acrylic/styrene resin powders, benzoguanamine resin powders, melamine resin powders, polyolefin resin powders, polyester resin powders, polyamide resin powders, polyimide resin powders, polyfluoroethylene resin powders, a carbon fiber, and a cellulose fiber.

The fine particles may be surface-treated as necessary.

From the viewpoint of heat resistance, the fine particles are preferably inorganic fine particles. From the viewpoint of dispersion stability of coating fluids, the fine particles are more preferably fine silicon oxide particles.

One kind of fine particle may be contained in the surface-modifying layer, or two or more kinds thereof may be contained.

A content of the fine particles that may be contained in the surface-modifying layer is preferably 0.1 parts by mass or more, more preferably 1 part by mass or more, and still more preferably 5 parts by mass or more with respect to 100 parts by mass of the polymer from the viewpoint of the high elasticity. From the viewpoint of film formability, the content thereof is preferably 50 parts by mass or less, more preferably 40 parts by mass or less, and still more preferably 30 parts by mass or less.

The kinds, combinations, contents, and the like of the fine particles which can be contained in the surface-modifying layer can be appropriately set in accordance with intended uses and desired properties.

An average thickness of the surface-modifying layer is preferably 0.1 $\mu$m to 50 $\mu$m.

In a method of separating the polymeric component and the oligomer component contained in a mixed state in the surface-modifying layer and determining a molecular weight of each component, examples of a method of separating the polymeric component and the oligomer component include a solid-phase extraction method, a liquid chromatography extraction method, and a solvent extraction method.

The molecular weight of each component can be determined by using the GPC method for each component separated by the separation method.

When composition information is necessary for identification of each component, a composition can be specified by combining analysis methods such as a nuclear magnetic resonance method such as $^1$H-NMR and $^{13}$C-NMR, an infrared spectroscopy (IR) method, a gas chromatography-mass spectrometry (GC-MS) method, and a matrix-assisted laser desorption ionization-time-of-flight spectrometry (MALDI-TOFMS) method.

A thickness of the surface-modifying layer is not particularly limited, and is 0.01 $\mu$m to 2,000 $\mu$m, more preferably 0.1 $\mu$m to 1,000 $\mu$m, still more preferably 0.1 $\mu$m to 50 $\mu$m, and particularly preferably 1 $\mu$m to 30 $\mu$m.

The thickness of the surface-modifying layer can be determined by measuring a thickness of the surface-modifying sheet with a dial thickness gauge (for example, Peacock GC-9), removing the surface-modifying layer in a portion where the thickness measurement is made, measuring a thickness of the release sheet in that portion, and taking a difference therebetween as the thickness of the surface-modifying layer.

The average thickness of the surface-modifying layer is an average of values measured on ten points.

<Release Sheet>

The release sheet is not particularly limited. However, the release sheet preferably has heat resistance of 100°C or higher and preferably has a tensile modulus at 100°C of 1 GPa or lower. Although the release sheet may be either a non-silicone resin sheet or a silicone resin sheet, it is preferably a non-silicone resin sheet. Examples thereof include a fluororesin sheet film (Nitoflon, manufactured by Nitto Denko Corp.), a polyester-based resin sheet, a polymethylpentene-based resin sheet (Opulent (registered trademark), manufactured by Mitsui Chemical Tohcello, Inc.), a polystyrene-based resin sheet (Oidys (registered trademark), manufactured by Kurabo Industries Ltd.), a polyamide-based resin sheet, and a polyolefin-based resin sheet.

More specific examples of the release sheet usable in the surface-modifying sheet include unstretched polyamide-6, unstretched polyamide-66, biaxially stretched polyamide-6, biaxially stretched polyamide-66, biaxially stretched polypropylene, biaxially stretched poly(ethylene terephthalate), biaxially stretched poly(butylene terephthalate), easy-to-shape poly(ethylene terephthalate), cast-shaped polytetrafluoroethylene, an unstretched extrusion-shaped tetrafluoroethylene/ethylene copolymer (ETFE), an unstretched extrusion-shaped tetrafluoroethylene/perfluoroalkoxyethylene copolymer (PFA), an unstretched extrusion-shaped tetrafluoroethylene/hexafluoropropylene copolymer (FEP), and laminated articles including these as main layers.

The thickness of the release sheet is preferably 1 $\mu$m to 1,000 $\mu$m, more preferably 10 $\mu$m to 500 $\mu$m, still more preferably 10 $\mu$m to 300 $\mu$m, and particularly preferably 10 $\mu$m to 100 $\mu$m from the viewpoint of conformability to shapes.

According to need, a surface of the release sheet which is to face the surface-modifying layer or both surfaces of the release sheet may be subjected to a release treatment with a suitable releasing agent, for example, silicone.

(Production of Surface-modifying Sheet)

The surface-modifying sheet can be produced by any suitable method. Examples thereof include: a method in which a release sheet is dipped in a solution (surface-modifying composition) including a solvent and a material for a surface-modifying layer and it is thereafter dried according to need; a method in which a solution including a solvent and a material for a surface-modifying layer is applied to a surface of a release sheet with a brush and it is thereafter dried according to need; a method in which a solution including a solvent and a material for a surface-modifying layer is applied to a surface of a release sheet with any of various coaters and it is thereafter dried according to need; and a method in which a solution including a solvent and a material for a surface-modifying layer is applied to a surface of a release sheet by spraying and it is thereafter dried according to need.

Examples of the surface-modifying composition include a solution obtained by dissolving a material for the surface-modifying layer in a solvent.

Examples of the solvent include: water; alcohols such as methanol, ethanol, and isopropyl alcohol (IPA); ketones such as methyl ethyl ketone; esters; aliphatic, alicyclic, and aromatic hydrocarbons; halogenated hydrocarbons; amides such as dimethylformamide; sulfoxides such as dimethyl sulfoxide; and ethers such as dimethyl ether and tetrahydrofuran. Preferred from the viewpoint of inhibiting production of gelled substance is ethanol or a solvent mixed with ethanol, isopropyl alcohol, and water. One kind of solvent may be employed, or two or more kinds thereof may be employed.

Solid concentration of the surface-modifying composition can be suitably set in accordance with intended uses. From the viewpoint of thickness accuracy of the surface-modifying layer, the solid concentration thereof in terms of mass proportion is preferably 1 mass% to 40 mass%, more preferably 10 mass% to 35 mass%, and still more preferably 15 mass% to 30 mass%.

The surface-modifying composition may contain various additives such as pH regulators, crosslinking agents, viscosity regulators (for example, thickeners), leveling agents, release regulators, plasticizers, softeners, fillers, colorants (for example, pigments and dyes), surfactants, antistatic agents, antiseptics, aging inhibitors, ultraviolet absorbers, antioxidants, and light stabilizers according to need.

For example, addition of a colorant renders the surface-modifying layer visible and this makes it easy to assess whether the surface of a resin member is modified or not. There is hence a merit in process control.

Examples of the colorant include a dye and a pigment. The colorant may be a fluorescent material which can be visually recognized in black light.

(Laminate)

A laminate according to the embodiment of the present invention is a laminate in which the surface-modifying layer of the surface-modifying sheet is laminated on at least a part of a surface of the resin material containing the heat-curable epoxy resin.

The laminate according to the embodiment of the present invention, which is the resin material having the surface-modifying layer, can be produced by laminating the surface-modifying-layer side of the surface-modifying sheet to at least a part of a surface of an unshaped resin material.

The heat-curable epoxy resin contained in the resin material is not particularly limited.

As described above, the HSP distance (Ra) between the oligomer component and the bisphenol A type glycidyl ether is used as the index of the compatibility between the oligomer component in the surface-modifying layer and the heat-curable epoxy resin contained in the resin member, but the bisphenol A type glycidyl ether is merely a compound used as an index, and may or may not be contained in the resin material.

Examples of the heat-curable epoxy resin include bisphenol A type glycidyl ether, bisphenol F type glycidyl ether, bisphenol AD type epoxy resin, a naphthalene type epoxy resin, a biphenyl type epoxy resin, a glycidyl amine type epoxy resin, an alicyclic epoxy resin, a dicyclopentadiene type epoxy resin, a polyether type epoxy resin, and a silicone-modified epoxy resin.

The resin material may be a prepreg.

Here, the term "prepreg" means a material obtained by impregnating a reinforcing material, for example, carbon fibers or glass fibers, with a resin containing additives, for example, a curing agent, and heating or drying the impregnated reinforcing material to a semi-cured state.

That is, the resin material may contain a fiber-reinforced resin, and the heat-curable epoxy resin may be a fiber-reinforced heat-curable epoxy resin.

Examples of the fiber-reinforced heat-curable epoxy resin include a carbon-fiber-reinforced heat-curable epoxy resin and a glass-fiber-reinforced heat-curable epoxy resin.

Examples of a shape of the resin material include a plate shape having flat surfaces, a plate shape having curved surfaces, a sheet shape, and a film shape.

A thickness of the resin material is, for example, 0.001 mm to 10 mm.

The expression "at least a part of a surface of a resin material" means at least a part of all the surfaces of the resin material. For example, in the case in which the resin material has a plate shape, sheet shape, or film shape, that expression means, for example, some of at least one surface thereof or all of at least one surface thereof.

With respect to the surface-modifying sheet and the surface-modifying layer, the above descriptions can be used as they are.

(Surface-modified Member)

The surface-modified member according to the embodiment of the present invention is one in which the surface-modifying layer of the surface-modifying sheet is laminated on at least a part of a surface of the resin member containing the heat-curable epoxy resin.

In the surface-modified member according to the embodiment of the present invention, the surface-modified member in which the surface-modifying layer 10 is provided on a surface of the resin member 100 as shown in FIG. 2 is obtained by shaping the resin material having the surface-modifying layer. A mixture layer in which the resin member and the surface-modifying layer are mixed is preferably provided between the resin member and the surface-modifying layer.

With respect to the surface-modifying sheet, surface-modifying layer, and resin material, the above descriptions can be used as they are. The resin member is obtained by shaping the resin material, and a preferable shape and a preferable thickness of the resin member are the same as those of the resin material.

The expression "at least a part of a surface of a resin member" means at least a part of all the surfaces of the resin member. For example, in the case in which the resin member has a plate shape, sheet shape, or film shape, that expression means, for example, some of at least one surface thereof or all of at least one surface thereof.

The mixture layer is a layer in which the resin member and the surface-modifying layer are mixed. For example, the mixture layer is a mixed-portion layer obtained by disposing the surface-modifying layer on at least a part of a surface of a resin material, followed by heating and shaping so that boundary portions of the surface-modifying layer and the resin member are welded and mixed, or chemical bonded by melt-contacting. The formation of the mixture layer improves the bonding strength between the resin member and the surface-modifying layer. In the mixture layer, the resin contained in the resin member has preferably been bonded, through a chemical reaction, for example, covalent bonding, to the polymeric component forming the surface-modifying layer. As a result of the chemical reaction, for example, covalent bonding, the boundary portions of the resin member and the surface-modifying layer disappear and the resin member is united with the surface-modifying layer. Hence, further improved bonding strength is obtained.

However, since the surface-modified member according to the embodiment of the present invention uses the surface-modifying sheet containing the oligomer component having low compatibility with the heat-curable epoxy resin, excessive mixing of the resin member and the surface-modifying layer is prevented.

A thickness of the mixture layer can be suitably decided in accordance with conditions for the heating and shaping and with the kinds of the resin member and surface-modifying layer. The thickness of the mixture layer is preferably 1.5 nm or more, more preferably 2.0 nm or more, from the viewpoint of improving the bonding strength. However, since the compatibility between the resin member and the surface-modifying layer is low, an upper limit thereof is about 10 $\mu$m.

The heating and shaping may be conducted simultaneously with the lamination of the resin material and the surface-modifying sheet or may be conducted after the surface-modifying sheet is laminated on the resin material.

By performing a surface treatment of the resin member by such a method, sufficient bonding strength can be imparted to the resin member and the surface-modified member can be highly efficiently produced at a low cost. A method for producing the surface-modified member can be also a method for treating a surface of a resin member (surface-treatment method for a resin).

(Method for Producing Surface-modified Member)

The method for producing the surface-modified member according to the embodiment of the present invention is not particularly limited. For example, the surface-modifying sheet, which is a laminate including the release sheet and the surface-modifying layer, is placed on at least a part of a surface of a resin material containing the heat-curable epoxy resin such that the surface-modifying layer faces the resin material, and the resin material and the surface-modifying layer are heated and shaped. Thus, the surface-modified member can be produced.

The heating and shaping causes the polymeric component contained in the surface-modifying layer to melt-mix or react with the heat-curable epoxy resin contained in the resin material by the melt-contacting so as to chemically bond with the heat-curable epoxy resin. Thus, the boundary portions of the surface-modifying layer and the resin material are welded and mixed, or chemical bonded by the melt-contacting, thereby forming the surface-modified member.

The heating and shaping may be conducted simultaneously with the placement of the surface-modifying sheet or may be conducted after the surface-modifying sheet is placed.

By performing the surface treatment of the resin member by such a method, the sufficient bonding strength can be imparted to the resin member and the surface-modified member can be highly efficiently produced at a low cost. Further, by using the surface-modifying sheet according to the embodiment of the present invention, the unreacted heat-curable epoxy resin contained in the resin material is less likely to transfer to the surface-modifying layer at the time of the heating and shaping, so that the change in appearance can be prevented even when the surface-modified member is exposed to the high-temperature high-humidity environment.

The method for producing the surface-modified member can be also the method for treating the surface of the resin member (surface-treatment method for a resin member).

With respect to the resin member, the resin material, the surface-modifying sheet, the release sheet, and the surface-modifying layer, the above descriptions can be used as they are.

In the production of the surface-modified member, when a curing temperature of the heat-curable epoxy resin contained in the resin member is set as $T_2$°C, it is preferred to dispose the surface-modifying layer on at least a part of a surface of the resin material containing the heat-curable epoxy resin and conduct the heating and shaping at a temperature of $T_1$°C or higher. The curing temperature is a temperature within an exothermic temperature range of a heat flow curve of an uncured heat-curable epoxy resin measured by DSC.

A heat-shaping temperature is preferably $T_1$°C to $T_3$°C, more preferably $(T_1 + 10)$°C to $(T_3 - 10)$°C, and still more preferably $(T_1 + 20)$°C to $(T_3 - 20)$°C.

Here, $T_1$ is a temperature (°C) at which an exothermic reaction starts when the uncured heat-curable epoxy resin is measured by DSC, and $T_3$ is a temperature (°C) at which the exothermic reaction ends.

By performing a surface treatment of the resin member by such a method at a heat-shaping temperature within that range, the boundary portions of the surface-modifying layer and resin member are brought into contact with each other in a molten state, resulting in welding and mixing, or chemical bonding. Hence, the sufficient bonding strength can be imparted to the resin member. Further, this impartation can be attained with high production efficiency and at a low cost.

Use can be made of a method in which at least a part of a surface of the resin member is brought into a molten state or softened state before the surface-modifying layer is disposed on the molten-state or softened-state surface of the resin member. By thus disposing the surface-modifying layer on the molten-state or softened-state surface of the resin member, the surface-modifying layer is welded and mixed or chemically bonded due to the heat of the surface of the resin member and the sufficient bonding strength can be imparted to the resin member.

The term "molten state" means that at least a part of the surface of the resin member is in a molten state, and this state is preferably attained by heating the resin member to a temperature of a melting point or more of the resin member

The term "softened state" means that at least a part of the surface of the resin member is in a softened state, and this can be attained preferably by heating the resin member to a temperature of a softening temperature or more of the resin member.

The "chemical bonding" can be attained when chemical covalent bonds are formed between the materials of the resin member and the surface-modifying layer.

Examples of methods for the heating and shaping include oven heating, infrared heating, high-frequency heating, and heat pressing. The heating and shaping is conducted preferably by resin shaping, and more preferably by heat pressing (press shaping).

A period of the heat-shaping is preferably 1 second to 10 minutes.

The method for producing a surface-modified member according to the embodiment of the present invention is a method for producing a surface-modified member using the surface-modifying sheet and may include a lamination step of laminating the surface-modifying layer to a resin member containing the heat-curable epoxy resin by the heat pressing.

In one mode of the heat pressing, for example, the surface-modifying sheet is placed on at least a part of a surface of a resin member (which may be the resin material) in a shaping machine (for example, a press) such that the surface-modifying layer faces the resin member, and the resin member and the surface-modifying sheet are subjected to shaping accompanied with heating (for example, integral shaping by heat pressing). In this mode, since the surface treatment of the resin member can be conducted simultaneously with shaping of the resin member, it is possible to provide high production efficiency and a low cost.

Shaping pressure at the time of the press shaping is preferably 1 MPa or more, more preferably 2 MPa or more, and still more preferably 3 MPa or more, from the viewpoint of deforming a molded article by a mold. From the viewpoint of maintaining a resin amount of the molded article, the shaping pressure is preferably 30 MPa or less, more preferably 20 MPa or less, and still more preferably 10 MPa or less.

By peeling the release sheet from the surface-modified member, a surface-modified member including the surface-modifying layer provided to a surface thereof is obtained. The peeling of the release sheet is not particularly limited, and the release sheet may be, for example, peeled off by hand or peeled off using a peeling apparatus therefor.

After the surface-modifying-layer side of the surface-modifying sheet is placed on at least a part of a surface of the resin member (which may be the resin material), followed by the heating and shaping, the release sheet is preferably removed, the surface-modifying sheet being the laminate of the release sheet and the surface-modifying layer.

For example, as shown in FIG. 3, the surface-modifying sheet 200 may be placed on a surface of a resin material 400 such that a surface-modifying-layer 10 side of the surface-modifying sheet 200 faces the surface of the resin material 400. Thereafter, the laminate can be heat-shaped to remove the release sheet.

By removing the release sheet in this way, the surface-modifying layer is transferred to the surface of the resin member, and the surface-modified member (sometimes called a multilayer member, which includes the resin member and the surface-modifying layer) is obtained.

As stated above, the surface-modified member preferably includes the mixture layer in which the resin member and the surface-modifying layer are mixed, between the resin member and the surface-modifying layer.

By the production method described above, the surface-modifying layer 10 is disposed on the surface of the resin member 100, thereby obtaining the surface-modified member as shown in FIG. 2. In FIG. 2, the surface-modifying layer 10 is laminated to the surface of the resin member 100. Preferably, however, the surface-modified member includes the mixture layer (not shown) in which the resin member and the surface-modifying layer are mixed, between the resin member 100 and the surface-modifying layer 10.

(Coated Article and Method for Producing Coated Article)

A coated article according to the embodiment of the present invention is one including the surface-modified member and a coating film provided to at least a part of the surface-modified member. Preferably, the coating film has been provided to at least a part of the surface of the surface-modifying-layer side of the surface-modified member. The coating film may be at least one film selected from among a coating, a printed layer, a vapor-deposited layer, and a plating layer.

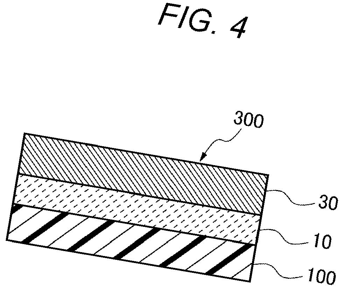

As an example of the coated article according to the embodiment of the present invention, FIG. 4 shows a coated article 300 including: a surface-modified member in which a surface-modifying layer 10 is disposed on a surface of a resin member 100; and a coating film 30 provided to a surface of a surface-modifying-layer side of the surface-modified member.

Since the surface-modifying layer is not formed by coating to a surface of a member but is formed by using the sheet-shaped surface-modifying sheet, the occurrence of unevenness due to the cissing and the like can be prevented. Because of this, the surface-modifying layer can be formed in an even thickness on the surface of the resin member and the coating film can be coated and provided thereon in an even film thickness.

Furthermore, in a case in which the surface-modifying layer is disposed on the surface of the resin member in the molten-state or softened-state, the surface-modifying layer has undergone welding and mixing, or chemical bonding due to the heat of the surface of the resin member and the bonding strength between the surface-modifying layer and the resin member is high; hence, a coating film having excellent adhesion can be formed. Moreover, since the surface-modifying layer and the resin member can be integrally shaped in forming the coated article, there is no need of performing a treatment for removing a release agent, such as a cleaning step with an organic solvent or a polishing step, before the coating film is formed, which can bring excellent safety and mitigate environmental burden and working burden.

Further, by using the surface-modifying sheet according to the embodiment of the present invention, the appearance change is less likely to occur in the obtained coated article even when the coated article is exposed to the high-temperature high-humidity environment.

The coating film is not particularly limited. Examples thereof include various coating films including epoxy-based, polyester/melamine-based, alkyd/melamine-based, acrylic/melamine-based, acrylic/urethane-based, and acrylic/polyacidic-curing-agent-based coating films.

A thickness of the coating film is not particularly limited, and is 0.01 $\mu$m to 2,000 $\mu$m, more preferably 0.1 $\mu$m to 1,000 $\mu$m, still more preferably 0.5 $\mu$m to 500 $\mu$m, and particularly preferably 1 $\mu$m to 200 $\mu$m.

A method for producing a coated article according to an embodiment of the present invention is a method for producing a coated article using the surface-modifying sheet according to the embodiment of the present invention, and includes: a step in which the surface-modifying layer is laminated to a resin member containing a heat-curable epoxy resin by heat pressing to produce a surface-modified member; and a step in which a coating film is formed on a surface-modifying-layer side the surface-modified member .

Coating methods for forming the coating film are not particularly limited, and use can be made of common methods including brushing, roller coating, spray coating, and coating by various coaters. An amount in which the coating material is to be applied is not particularly limited. Further, a time period, a temperature, and the like in heating the coating film can be suitably decided in accordance with the coating material to be used, application amount, and the like.

With respect to the resin member, the surface-modifying sheet, the surface-modifying layer, and the surface-modified member, the above descriptions can be used as they are. Further, for the step of producing the surface-modified member, the description in (Method for Producing Surface-modified Member) described above can be used as it is.

(Process Control Method)

In the production of the surface-modifying sheet, the surface-modified member, and the coated article according to the embodiments of the present invention, the surface-modifying layer can be rendered visible, for example, by incorporating an additive, such as a dye, a pigment, or a crystalline substance, into a surface-modifying composition or into the surface-modifying layer, making production steps easy to control.
With respect to the surface-modifying composition, surface-modifying sheet, coated article, and additive, the above descriptions can be used as they are.
Examples of process control methods include a method in which a portion colored by a surface treatment is discriminated by visually ascertaining it or by examining an image thereof captured with a camera.

Examples

The present invention is specifically described below by reference to examples, but the present invention is not limited to those examples in any way.

<Weight Molecular Weight (Mw) of Oligomer Component>

The weight average molecular weight (Mw) of the oligomer component was set to the value in terms of polymethyl methacrylate determined from the calibration curve prepared from standard polystyrene using the gel permeation chromatography (GPC) method.

(Weight Average Molecular Weight (Mw) Measurement Conditions)

Device name: HLC-8420 GPC, manufactured by TOSOH CORPORATION
Test piece concentration: 1 mg/mL
Test piece introduction volume: 20 $\mu$l
Eluent: HFIP + 10 mM - $CF_3COONa$
Flow rate: 0.300 ml/min
Measurement (column) temperature: 40°C
Column: test piece column; TSKgel Super AWM-H (two columns), reference column; TSKgel Super H-RC (one column), manufactured by TOSOH CORPORATION
Detector: differential refractometer (RI)

<HSP Distance (Ra) Between Oligomer Component and Bisphenol A type Glycidyl Ether>

An estimation method using a neural network method called Y-MB implemented in HSP value calculation software (HSPiP Ver. 4.1.0.7 (Hansen Solubility Parameters in Practice)) was used. At this time, a molecular structure was obtained by inputting a Smiles formula which is a linear molecular notation, and a HSP value ($\delta_{D1}$, $\delta_{P1}$, and $\delta_{H1}$) of the oligomer component and a HSP value ($B_{D2}$, $\delta_{P2}$, and $\delta_{H2}$) of the bisphenol A type glycidyl ether were obtained.
The HSP distance (Ra) was calculated by Formula (1).

$$\text{Ra} = \{4 \times (\delta_{D1} - \delta_{D2})^2 + (\delta_{P1} - \delta_{P2})^2 + (\delta_{H1} - \delta_{H2})^2\}^{1/2} \qquad (1)$$

(In Formula (1), $\delta_{D1}$ represents dispersion force of the oligomer component, $\delta_{P1}$ represents the permanent dipole intermolecular force of the oligomer component, $\delta_{H1}$ represents hydrogen bonding power of the oligomer component, $\delta_{D2}$ represents dispersion force of the bisphenol A type glycidyl ether, $\delta_{P2}$ represents permanent dipole intermolecular force of the bisphenol A type glycidyl ether, and $\delta_{H2}$ represents hydrogen bonding power of the bisphenol A type glycidyl ether.)

<Thickness of Surface-modifying Layer>

The thickness of the surface-modifying layer was determined with a dial gauge (GC-9, manufactured by Peacock). The thickness of the surface-modifying sheet was measured. The surface-modifying layer in a portion where thickness measurement was made was removed, and the thickness ($\mu$m) of the release sheet in that portion was measured. The difference therebetween was taken as the thickness ($\mu$m) of the surface-modifying layer. The average thickness ($\mu$m) was an average of measured values for ten points.

<Thickness of Coating Film>

A thickness of the coating film was determined with the dial gauge (GC-9, manufactured by Peacock). The coated article and the surface-modified member on which the coating film had not been formed were examined for thickness, and the difference therebetween was regarded as the thickness ($\mu$m) of the coating film. The average thickness ($\mu$m) was an average of measured values for ten points.

<60° glossiness>

60° glossiness at room temperature (25°C) was measured by measurement of specular gloss (JIS Z8741-1997). A glossmeter (micro-tri-gloss) manufactured by BYK GmbH was placed on a surface of a coated article to measure the glossiness of the coating film. The average glossiness was an average of measured values for five points.
The coated article was held for 24 hours in a thermo-hygrostatic chamber set in an environment of a temperature of 85°C and a humidity of 85% RH and was then examined for 60° glossiness.
A decrease in 60° glossiness was calculated from the 60° glossiness at room temperature (25°C) described above and the 60° glossiness measured after 24-hour holding in the environment having the temperature of 85°C and the humidity of 85% RH, using the following formula.

$$\text{Decrease in glossiness (\%)} = [(\text{glossiness (25°C)} - \text{glossiness (85°C/85\% RH)})/\text{glossiness (25°C)}] \times 100$$

In a case in which the decrease in 60° glossiness was 3% or less, it was deemed that the coating film was able to be prevented from changing in appearance.

<Coating adhesion>

Coated articles produced in the Examples and Comparative Examples were each evaluated for crosscut adhesion by a crosscut method described in JIS K5600-5-6, and the number of peeled coating-film squares was counted. In a case in which the number of peeled coating-film squares among 100 squares was 0, the coating was deemed to have satisfactory adhesion.

- Cutting interval: 2 mm
- Number of squares formed by crosscutting: 100
- Peeling tape: (Nichiban) Cellophane Tape (registered trademark); 24-mm wide

(Example 1)

(Surface-modifying Sheet (1))

In a 40°C solvent mixed with ethanol (EtOH)/water/isopropyl alcohol (IPA) = 68 mass%/12 mass%/20 mass% were dissolved 100 parts by mass of a copolyamide resin (Amilan CM8000, manufactured by Toray Industries, Inc.) and 0.1 parts by mass of acrylic oligomer (ARUFON UP-1000 manufactured by Toagosei Co., Ltd.) to produce a solution (surface-modifying composition) having a solid content of 20 mass%.
The produced surface-modifying composition was filtered with a nylon sieve having an opening size of 188 $\mu$m and then applied to a release sheet (Nitoflon 900 UL, manufactured by Nitto Denko Corp.; fluororesin sheet film (polytetrafluoroethylene (PTFE) (thickness: 0.05 mm; dimensions: width 250 mm $\times$ length 450 mm))) with an applicator. The applied composition was dried in a thermostatic drying oven at 100°C for 2 minutes to produce a surface-modifying sheet (1) which is a release sheet including a surface-modifying layer having a thickness of 10 $\mu$m.

(Surface-modified member (1))

The surface-modifying sheet (1) produced above was stacked on a carbon-fiber-reinforced heat-curable epoxy resin prepreg (bisphenol A type glycidyl ether, manufactured by Toray Industries, Inc., Torayca, FK6244C-84K) (dimensions: width 150 mm × length 120 mm × thickness 1 mm), and the stacked one was heat welded by pressing (shaping pressure 3 MPa, 150°C, and 5 minutes) to produce a surface-modified member (1).

(Coated article (1))

The release sheet of the surface-modified member (1) produced above was peeled off, and V-Top H (two-pack type curable urethane coating material), manufactured by Dai Nippon Toryo Co., Ltd., was applied to the surface-modifying layer with an applicator. The coating film was cured at room temperature for 3 days or more to produce a coated article (1) having a coating film having a thickness of 50 $\mu$m.

(Examples 2 to 7)

Surface-modifying sheets (2) to (7), surface-modified members (2) to (7), and coated articles (2) to (7) were produced in the same manner as in Example 1 except that the materials and the amounts used for the surface-modifying composition were changed as shown in Table 1.

(Example 8)

A surface-modifying sheet (8), a surface-modified member (8), and a coated article (8) were produced in the same manner as in Example 2 except that the thickness of the surface-modifying layer was changed to 30 $\mu$m.

(Comparative Examples 1 to 11)

Surface-modifying sheets (r1) to (r11), surface-modified members (r1) to (r11), and coated articles (r1) to (r11) were produced in the same manner as in Example 1 except that the materials and the amounts used for the surface-modifying compositions were changed as shown in Table 2.

(Comparative Example 12)

A coated article (r12) was produced in the same manner as in Example 1 except that the surface-modifying layer was not provided, and the surface-modified member was produced using the release sheet.

Examples and Comparative Examples are shown in Tables 1 and 2 below.

[Table 1]

Table 1

| | | | | Example 1 | Example 2 | Example 3 | Example 4 |
|---|---|---|---|---|---|---|---|
| Surface-modifying layer | Polymer | CM8000 (copolyamide) | | 100 | 100 | 100 | 100 |
| | | FR105 (methoxymethyl-group-containing nylon-6) | | | | | |
| | Oligomer | UP-1000 (acrylic) | | 0.1 | 2 | 25 | |
| | | UP-1080 (acrylic) | | | | | 2 |
| | | UP-1150 (styrene) | | | | | |
| | | Nicanor H (xylene) | | | | | |
| | | Pensel D125 (rosin ester) | | | | | |
| | | Haritak PCJ (rosin ester) | | | | | |
| | | UC-3510 (acrylic) | | | | | |
| | | Pensel D160 (rosin ester) | | | | | |
| | | MHDR (rosin ester) | | | | | |
| | | UC-3000 (acrylic) | | | | | |
| | | YS polyster UH1150 (terpene phenol) | | | | | |
| | | Mw | | 2400 | 2400 | 2400 | 4300 |
| | | Ra (to BisA-Ep) | | 8.6 | 8.6 | 8.6 | 8.6 |
| | Solid content | (mass%) | | 20% | 20% | 20% | 20% |
| | Solvent | EtOH/water/IPA | | 68/12/20 | 68/12/20 | 68/12/20 | 68/12/20 |
| | Thickness | μm | | 10 | 10 | 10 | 10 |
| Coating film appearance | Coating film thickness | μm | | 50 | 50 | 50 | 50 |
| | 60° glossiness | 25°C | | 88.5 | 88.0 | 88.2 | 88.9 |
| | 60° glossiness | (85°C/after 85% feeding) | | 88 | 86.6 | 85.8 | 87.0 |
| | Decrease in 60° glossiness | % | | 0.6 | 1.6 | 2.7 | 2.1 |
| Coating adhesion | | Number of peeled squares (among 100 squares) | | 0 | 0 | 0 | 0 |

(continued)

| | | | Example 5 | Example 6 | Example 7 | Example 8 |
|---|---|---|---|---|---|---|
| Surface-modifying layer | Polymer | CM8000 (copolyamide) | | | | 100 |
| | | FR105 (methoxymethyl-group-containing nylon-6) | 100 | 100 | 100 | |
| | Oligomer | UP-1000 (acrylic) | | | | 2 |
| | | UP-1080 (acrylic) | | | | |
| | | UP-1150 (styrene) | 2 | | | |
| | | Nicanor H (xylene) | | 2 | | |
| | | Pensel D125 (rosin ester) | | | 2 | |
| | | Haritak PCJ (rosin ester) | | | | |
| | | UC-3510 (acrylic) | | | | |
| | | Pensel D160 (rosin ester) | | | | |
| | | MHDR (rosin ester) | | | | |
| | | UC-3000 (acrylic) | | | | |
| | | YS polyster UH1150 (terpene phenol) | | | | |
| | | Mw | 5200 | 557 | 1400 | 2400 |
| | | Ra (to BisA-Ep) | 9.3 | 7.9 | 8.1 | 8.6 |
| | Solid content | (mass%) | 20% | 20% | 20% | 20% |
| | Solvent | EtOH/water/IPA | 68/12/20 | 68/12/20 | 68/12/20 | 68/12/20 |
| | Thickness | $\mu$m | 10 | 10 | 10 | 30 |
| Coating film appearance | Coating film thickness | $\mu$m | 50 | 50 | 50 | 50 |
| | 60° glossiness | 25°C | 89.4 | 88.8 | 89.0 | 88.0 |
| | 60° glossiness | (85°C/after 85% feeding) | 86.9 | 86.6 | 87.1 | 86.0 |
| | Decrease in 60° glossiness | % | 2.8 | 2.5 | 2.1 | 2.3 |
| Coating adhesion | | Number of peeled squares (among 100 squares) | 0 | 0 | 0 | 0 |

[Table 2]

Table 2

| | | | Comparative Example 1 | Comparative Example 2 | Comparative Example 3 | Comparative Example 4 | Comparative Example 5 | Comparative Example 6 |
|---|---|---|---|---|---|---|---|---|
| Surface-modifying layer | Polymer | CM8000 (copolyamide) | 100 | | 100 | 100 | | |
| | | FR105 (methoxymethyl-group-containing nylon-6) | | 100 | | | 100 | 100 |
| | Oligomer | UP-1000 (acrylic) | | | 0.01 | 50 | | |
| | | UP-1080 (acrylic) | | | | | | |
| | | UP-1150 (styrene) | | | | | | |
| | | Nicanor H (xylene) | | | | | | |
| | | Pensel D125 (rosin ester) | | | | | | |
| | | Haritak PCJ (rosin ester) | | | | | | 2 |
| | | UC-3510 (acrylic) | | | | | 50 | |
| | | Pensel D160 (rosin ester) | | | | | | |
| | | MHDR (rosin ester) | | | | | | |
| | | UC-3000 (acrylic) | | | | | | |
| | | YS polyster UH1150 (terpene phenol) | | | | | | |
| | | Mw | - | - | 2400 | 2400 | 2000 | 1300 |
| | | Ra (to BisA-Ep) | - | - | 8.6 | 8.6 | 6.5 | 4.5 |
| | Solid content | (mass%) | 20% | 20% | 20% | 20% | 20% | 20% |

(continued)

| | | | Comparative Example 1 | Comparative Example 2 | Comparative Example 3 | Comparative Example 4 | Comparative Example 5 | Comparative Example 6 |
|---|---|---|---|---|---|---|---|---|
| | Solvent | EtOH/water/IPA | 68/12/20 | 68/12/20 | 68/12/20 | 68/12/20 | 68/12/20 | 68/12/20 |
| | Thickness | μm | 10 | 10 | 10 | 10 | 10 | 10 |
| | Coating film thickness | μm | 50 | 50 | 50 | 50 | 50 | 50 |
| Coating film appearance | 60° glossiness | (25°C) | 85.8 | 89.2 | 86.1 | 88.3 | 88.0 | 88.8 |
| | 60° glossiness | (85°C/after 85% feeding) | 75.8 | 82.7 | 78.4 | 83.8 | 82.0 | 84.8 |
| | Decrease in 60° glossiness | % | 11.7 | 7.3 | 8.9 | 5.1 | 6.8 | 4.5 |
| Coating adhesion | | Number of peeled squares (among 100 squares) | 0 | 0 | 0 | 0 | 0 | 0 |

| | | | Comparative Example 7 | Comparative Example 8 | Comparative Example 9 | Comparative Example 10 | Comparative Example 11 | Comparative Example 12 |
|---|---|---|---|---|---|---|---|---|
| Surface-modifying layer | Polymer | CM8000 (copolyamide) | | | | | | |
| | | FR105 (methoxymethyl-group-containing nylon-6) | 100 | 100 | 100 | 100 | 100 | |
| | Oligomer | UP-1000 (acrylic) | | | | | | |
| | | UP-1080 (acrylic) | | | | | | |
| | | UP-1150 (styrene) | | | | | | |
| | | Nicanor H (xylene) | | | | | | |
| | | Pensel D125 (rosin ester) | | | | | | |
| | | Haritak PCJ (rosin ester) | | | | | | |
| | | UC-3510 (acrylic) | 2 | | | | | |
| | | Pensel D160 (rosin ester) | | 2 | | | | |
| | | MHDR (rosin ester) | | | 2 | | | |
| | | UC-3000 (acrylic) | | | | 2 | | |
| | | YS polyster UH1150 (terpene phenol) | | | | | 2 | |
| | | Mw | 2000 | 3300 | 79 | 8800 | 9800 | - |
| | | Ra (to BisA-Ep) | 6.5 | 5.5 | 7.6 | 8.1 | 6.1 | - |
| | Solid content | (mass%) | 20% | 20% | 20% | 100% | 100% | - |
| | Solvent | EtOH/water/IPA | 68/12/20 | 68/12/20 | 68/12/20 | 68/12/20 | 68/12/20 | - |
| | Thickness | μm | 10 | 10 | 10 | 10 | 10 | - |

(continued)

| | | | Comparative Example 7 | Comparative Example 8 | Comparative Example 9 | Comparative Example 10 | Comparative Example 11 | Comparative Example 12 |
|---|---|---|---|---|---|---|---|---|
| Coating film appearance | Coating film thickness | μm | 50 | 50 | 50 | 50 | 50 | 50 |
| | 60° glossiness | (25°C) | 89.2 | 87.8 | 88.8 | 89.0 | 88.8 | 88.3 |
| | 60° glossiness | (85°C/after 85% feeding) | 82.0 | 78.2 | 84.8 | 82.6 | 85.5 | 88.1 |
| | Decrease in 60° glossiness | % | 8.1 | 10.9 | 4.5 | 7.2 | 3.7 | 0.2 |
| Coating adhesion | | Number of peeled squares (among 100 squares) | 0 | 0 | 0 | 0 | 0 | 95 |

The materials shown in Tables 1 and 2 are as follows.

- Polymer

  CM8000: copolyamide resin (Amilan, manufactured by Toray Industries, Inc.)

  FR105: methoxymethyl-group-containing nylon-6 (Fine Resin, manufactured by Namariichi Co., Ltd.)

- Oligomer

  UP-1000: acrylic oligomer (ARUFON manufactured by Toagosei Co., Ltd.)

  UP-1080: acrylic oligomer (ARUFON manufactured by Toagosei Co., Ltd.)

  UP-1150: styrene oligomer (ARUFON manufactured by Toagosei Co., Ltd.)

  Nicanor H: xylene oligomer (Nicanor H-80 manufactured by Fudow Co., Ltd.)

  Pensel D-125: rosin ester oligomer (Pensel manufactured by ARAKAWA CHEMICAL INDUSTRIES, LTD.)

  Haritak PCJ: rosin ester oligomer (Haritak manufactured by HARIMA CHEMICALS GROUP, INC.)

  UC-3510: acrylic oligomer (ARUFON manufactured by Toagosei Co., Ltd.)

  Pensel D160: rosin ester oligomer (Pensel manufactured by ARAKAWA CHEMICAL INDUSTRIES, LTD.)

  MHDR: rosin ester oligomer (manufactured by Sun Shine Forestry & Chemicals Co., Ltd.)

  UC-3000: acrylic oligomer (ARUFON manufactured by Toagosei Co., Ltd.)

  YS polyster UH1150: terpene phenol oligomer (YS Polyster manufactured by Yasuhara Chemical Co., Ltd.)

INDUSTRIAL APPLICABILITY

In a surface-modifying sheet according to an embodiment of the present invention, a smooth surface-modifying layer having excellent bonding strength, preventing an occurrence of unevenness, and having a uniform thickness can be formed, a change in appearance is prevented even in a high-temperature high-humidity environment, and the surface-modifying layer and a resin member can be integrally shaped at the time of forming a surface-modified member.

While the invention has been described in detail and with reference to specific embodiments thereof, it will be apparent to one skilled in the art that various changes and modifications can be made therein without departing from the spirit and scope thereof.

The present application is based on Japanese Patent Application (Japanese Patent Application No. 2021-051500) filed on March 25, 2021, and the contents of which are incorporated herein by reference.

REFERENCE SIGNS LIST

    10 surface-modifying layer
    20 release sheet
    30 coating film
    100 resin member
    200 surface-modifying sheet
    300 coated article
    400 resin material

**Claims**

1. A surface-modifying sheet comprising:

   a release sheet and a surface-modifying layer, wherein
   the surface-modifying layer contains a polymeric component and an oligomer component,
   the oligomer component has a weight average molecular weight (Mw) of 100 to 7,000,
   a HSP distance (Ra) between the oligomer component and a bisphenol A type glycidyl ether is 7.5 or more, and
   the oligomer component is contained in an amount of 0.1 to 30 parts by mass with respect to 100 parts by mass of the polymeric component.

2. The surface-modifying sheet according to claim 1, wherein
   the polymeric component has a nonpolar unit and a polar unit.

3. The surface-modifying sheet according to claim 1 or 2, wherein
   the surface-modifying layer has an average thickness of 0.1 $\mu$m to 50 $\mu$m.

4. A laminate, wherein
   the surface-modifying layer of the surface-modifying sheet according to any one of claims 1 to 3 is laminated to at least a part of a surface of a resin material containing a heat-curable epoxy resin.

5. The laminate according to claim 4, wherein
   the resin material is a prepreg.

6. A surface-modified member, wherein
   the surface-modifying layer of the surface-modifying sheet according to any one of claims 1 to 3 is laminated to at least a part of a surface of a resin member containing a heat-curable epoxy resin.

7. A coated article, wherein
   a coating film is provided to at least a part of the surface-modified member according to claim 6.

8. The coated article according to claim 7, wherein
   the coating film is at least a kind selected from a coating, a printed layer, a vapor-deposited layer, and a plating layer.

9. A method for producing a surface-modified member using the surface-modifying sheet according to any one of claims 1 to 3, the method comprising:
   a lamination step of laminating the surface-modifying layer to a resin member containing a heat-curable epoxy resin by heat pressing.

10. A method for producing a coated article using the surface-modifying sheet according to any one of claims 1 to 3, the method comprising:

    a step of producing a surface-modified member by laminating the surface-modifying layer to a resin member containing a heat-curable epoxy resin by heat pressing and
    a step of forming a coating film on the surface-modifying-layer side of the surface-modified member.

## FIG. 1

200
20
10

## FIG. 2

10
100

## FIG. 3

20
10
200
400

# FIG. 4

## INTERNATIONAL SEARCH REPORT

| International application No. |
|---|
| **PCT/JP2022/011435** |

**A. CLASSIFICATION OF SUBJECT MATTER**

*B32B 27/00*(2006.01)i; *B32B 27/38*(2006.01)i; *B32B 7/06*(2019.01)i
FI:  B32B27/00 B; B32B7/06; B32B27/38

According to International Patent Classification (IPC) or to both national classification and IPC

**B. FIELDS SEARCHED**

Minimum documentation searched (classification system followed by classification symbols)

B32B1/00-43/00; B29B11/00-11/16; C08J5/24

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2019-119845 A (NITTO DENKO CORP) 22 July 2019 (2019-07-22) claims 1-17, paragraphs [0001], [0057], [0112], [0139], examples 1-16 | 1-3, 5 |
| A | claims 1-17, paragraphs [0001], [0057], [0112], [0139], examples 1-16 | 4, 6-10 |
| X | WO 2019/187388 A1 (NITTO DENKO CORP) 03 October 2019 (2019-10-03) claims 1-12, paragraph [0079], examples 1-8 | 1-3 |
| A | claims 1-12, paragraph [0079], examples 1-8 | 4-10 |
| A | JP 3-270907 A (TONEN CORP) 03 December 1991 (1991-12-03) claims, examples | 1-10 |
| A | JP 2020-163831 A (NITTO DENKO CORP) 08 October 2020 (2020-10-08) claims 1-14, paragraph [0001], examples 1-18 | 1-10 |
| A | JP 2019-194016 A (NITTO DENKO CORP) 07 November 2019 (2019-11-07) claims 1-21, examples 1-34 | 1-10 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **20 April 2022** | **10 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/011435**

| Patent document cited in search report | | | Publication date (day/month/year) | Patent family member(s) | | | Publication date (day/month/year) |
|---|---|---|---|---|---|---|---|
| JP | 2019-119845 | A | 22 July 2019 | WO | 2019/130822 | A1 | |
| | | | | CN | 111492007 | A | |
| WO | 2019/187388 | A1 | 03 October 2019 | US | 2021/0070011 | A1 | |
| | | | | claims 1-12, paragraph [0083], examples 1-12 | | | |
| | | | | CN | 111902506 | A | |
| | | | | KR | 10-2020-0135334 | A | |
| JP | 3-270907 | A | 03 December 1991 | (Family: none) | | | |
| JP | 2020-163831 | A | 08 October 2020 | WO | 2020/203160 | A1 | |
| JP | 2019-194016 | A | 07 November 2019 | US | 2021/0238373 | A1 | |
| | | | | claims 1-20, examples 1-34 | | | |
| | | | | WO | 2019/208666 | A1 | |
| | | | | EP | 3785898 | A1 | |
| | | | | KR | 10-2021-0005870 | A | |
| | | | | CN | 112020429 | A | |

Form PCT/ISA/210 (patent family annex) (January 2015)

**REFERENCES CITED IN THE DESCRIPTION**

**Patent documents cited in the description**

- JP 2017128722 A
- JP 2019194016 A
- JP 2020163831 A
- JP 2021051500 A

**Non-patent literature cited in the description**

- **HANSEN ; CHARLES M. HANSEN.** Solubility Parameters: A Users Handbook. CRC Press, 2007